# EUROPEAN PATENT APPLICATION

(11) **EP 1 791 208 A2**
(43) Date of publication of application: **30.05.2007**
(21) Application number: 06021959.9
(22) Date of filing: 19.10.2006
(51) Int. Cl.: H01M 8/04

(54) **Fuel cell system**

(30) Priority: 29.11.2005 KR 20050115143
(71) Applicant: LG Electronics Inc., Yongdungpo-Gu Seoul (KR); LG Chem, Ltd., Yongdungpo-Gu Seoul (KR)
(72) Inventor: Park, Myung-Seok, Gwangmyeong Gyeonggi-Do (KR); Heo, Seong-Geun, Bucheon Gyeonggi-Do (KR)
(74) Representative: Urner, Peter

(57) **Abstract**

A fuel cell system comprises: a stack unit for generating electricity by electrochemically reacting hydrogen and air; a fuel supply unit for supplying hydrogen to the stack unit; an air supply unit for supplying air to the stack unit; and a module unit having a used gas line for exhausting used gas generated from the fuel supply unit, having a fuel supply line for supplying hydrogen provided from the fuel supply unit to the stack unit, and having an air supply line for supplying air provided from the air supply unit to the stack unit, in which the used gas line, the fuel supply line, and the air supply line are sequentially arranged and integrally modularized. Hydrogen and air each having a requested temperature from the stack unit are supplied to the stack unit, thereby enhancing a thermal efficiency of the fuel cell system.

## Description

### BACKGROUND OF THE INVENTION

### 1. Field of the Invention

The present invention relates to a fuel cell system, and more particularly, to a fuel cell system capable of supplying hydrogen and air having a proper temperature to a stack unit.

### 2. Description of the Background Art

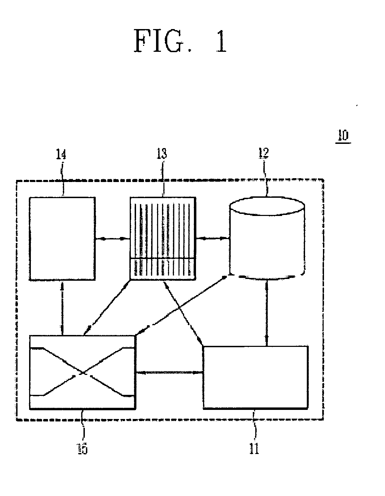

FIG. 1 is a view showing each component of a fuel cell system in accordance with the related art. Referring to FIG. 1, the related art fuel cell system 10 comprises a reformer 12 for supplying hydrogen to a stack 11; a gas-liquid separation unit 13 for removing moisture included in hydrogen supplied to the stack 11; a heat exchanger 14 for heat-exchanging heat generated from the stack 11; and a humidifier 15 for humidifying air supplied to the stack 11.

The stack 11 is formed accordingly as a plurality of cells each consisting of an electrode and an electrolyte for electricity generation are laminated one another. The stack 11 is very sensitive to a temperature. Since an electrochemical reaction speed between hydrogen and air is varied according to the temperature of the stack 11, the stack 11 has to maintain a proper temperature with consideration of durability of the cell. For instance, in a Proton Exchange Membrane Fuel Cell (PEMFC) using only hydrogen as a fuel, the stack 11 has to have a proper temperature of 50°C~80°C. Accordingly, the heat exchanger 14 boots temperature of air and hydrogen.

The gas-liquid separation unit 13 removes moisture included in hydrogen so as to provide air having a proper moisture to the stack 11, and the humidifier 15 provides moisture to air.

As shown in FIG. 1, the related art fuel cell system comprises a reformer 12, a gas-liquid separation unit 13, a heat exchanger 14, and a humidifier 15. The components of the fuel cell system are individually installed thus to be connected to one another by pipes. While hydrogen and air are supplied into the stack 11 via the reformer 12, the gas-liquid reformer 13, the heat exchanger 14, the humidifier 15, and the pipes, temperatures thereof are greatly changed and a pressure/flow amount loss thereof occurs.

Accordingly, hydrogen and air each having a proper temperature are not smoothly supplied to the stack 11, and thus an optimum electrochemical reaction is not performed in the stack 11.

Also, while hydrogen and air pass through the reformer 12, the gas-liquid reformer 13, the heat exchanger 14, the humidifier 15, and the pipes, a thermal loss thereof thereof is increased thus to degrade a thermal efficiency of the fuel cell system.

Furthermore, since the reformer 12, the gas-liquid reformer 13, the heat exchanger 14, the humidifier 15, and the pipes are individually installed, an entire volume of the fuel cell system is increased. When the components are individually produced, a mass productivity of the fuel cell system is degraded.

### SUMMARY OF THE INVENTION

Therefore, an object of the present invention is to provide a fuel cell system capable of supplying hydrogen and air each having a proper temperature to a stack unit.

Another object of the present invention is to provide a fuel cell system capable of increasing a thermal efficiency.

Still another object of the present invention is to provide a fuel cell system having a decreased volume and an enhanced mass productivity.

To achieve these and other advantages and in accordance with the purpose of the present invention, as embodied and broadly described herein, there is provided a fuel cell system, comprising: a stack unit for generating electricity by electrochemically reacting hydrogen and air; a fuel supply unit for supplying hydrogen to the stack unit; an air supply unit for supplying air to the stack unit; and a module unit having a used gas line for exhausting used gas generated from the fuel supply unit, having a fuel supply line for supplying hydrogen provided from the fuel supply unit to the stack unit, and having an air supply line for supplying air provided from the air supply unit to the stack unit, in which the used gas line, the fuel supply line, and the air supply line are sequentially arranged and integrally modularized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a view showing each component of a fuel cell system in accordance with the related art;
FIG. 2 is a block diagram showing a fuel cell system according to a first embodiment of the present invention;
FIG. 3 is a view showing a module unit of FIG. 2;
FIG. 4 is a view showing a module unit of FIG. 2 according to a first modification example, the module unit further including first and second gas-liquid separation units and first and second recollect lines;
FIG. 5 is a view showing a module unit of FIG. 2 according to a second modification example, the module unit further including a heat exchanger; and
FIG. 6 is a view showing a module unit of FIG. 2 according to a third modification example, the module unit further including the first and second gas-liquid separation units, the first and second recollect lines, and the heat exchanger.

### DETAILED DESCRIPTION OF THE INVENTION

Reference will now be made in detail to the preferred embodiments of the present invention, examples of which are illustrated in the accompanying drawings.

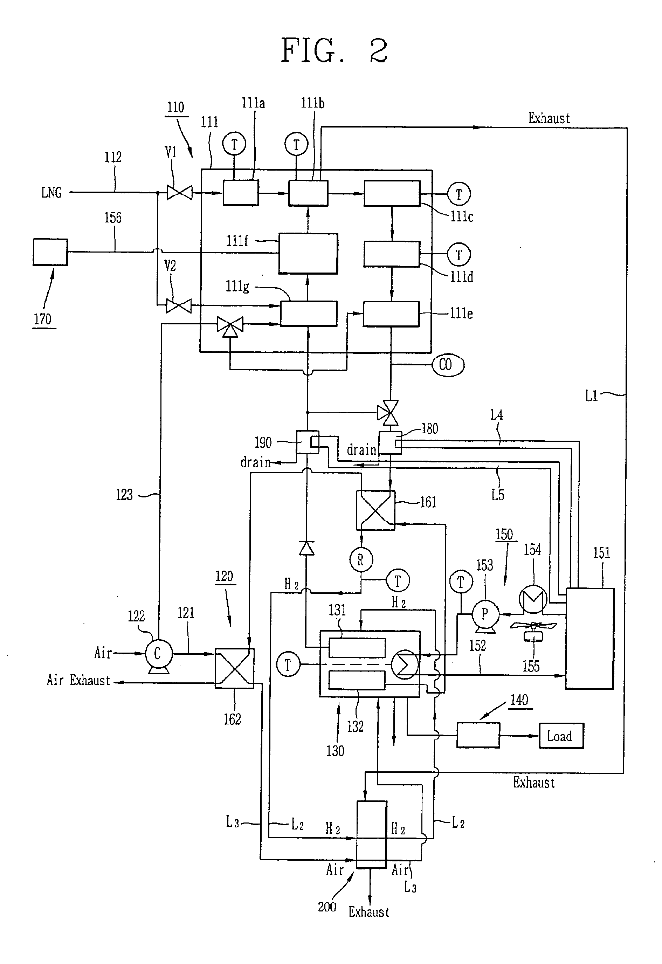

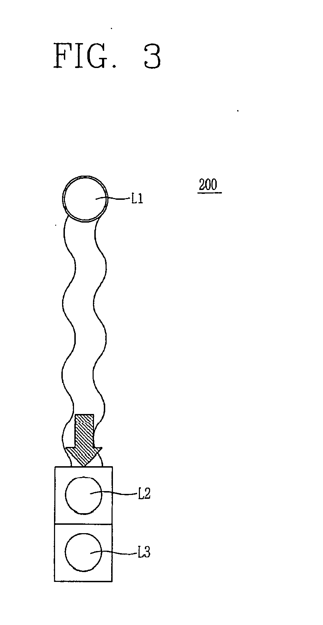

Hereinafter, a fuel cell system according to a first embodiment of the present invention will be explained in more detail with reference to the attached drawings. FIG. 2 is a block diagram showing a fuel cell system according to a first embodiment of the present invention, and FIG. 3 is a view showing a module unit of FIG. 2.

Referring to FIG. 2, the fuel cell system according to a first embodiment of the present invention comprises a fuel supply unit 110, an air supply unit 120, a stack unit 130, an electricity output unit 140, a water supply unit 150, a warm water supply unit 170, a first gas-liquid separation unit 180, a second gas-liquid separation unit 190, and a module unit 200.

The fuel supply unit 110 includes a reformer 111 for refining hydrogen from LNG thus supplying the hydrogen to an anode 131 of the stack unit 130, and a pipe 112 for supplying LNG to the reformer 111. The reformer 111 includes a desulfurizing reactor 111 a for removing sulfur contained in a fuel, a steam reformer 111b for generating hydrogen by reforming a fuel and steam, a high temperature steam reformer 111c and a low temperature steam reformer 111d respectively for additionally generating hydrogen by re-acting carbon monoxide generated after passing through the steam reformer 111b, a partial oxidation reactor 111e for refining hydrogen by removing carbon monoxide included in a fuel by using air as a catalyst, a steam generator 111 f for supplying steam to the steam reformer 111 b, and a burner 111g for supplying heat to the steam generator 111f.

Used gas generated from the reformer 111 is supplied to a module unit 200 that will be later explained through a used gas line L1. Also, hydrogen generated from the reformer 111 is supplied to a stack unit 130 through a fuel supply line L2 after passing the module unit 200.

The air supply unit 120 includes a first air supply line 121, a second air supply line 123, and an air supply fan 122. The first air supply line 121 is installed between the air supply fan 122 and a second pre-heater 162 so as to supply atmospheric air to a cathode 132. The second air supply line 123 is installed between the air supply fan 122 and the burner 111g so as to supply atmospheric air to the burner 111g. Air exhausted from the second pre-heater 162 is supplied to the module unit 200 through an air supply line L3.

The stack unit 130 includes the anode 131 and the cathode 132 respectively for generating both electric energy and thermal energy by an electrochemical reaction between hydrogen and oxygen respectively supplied from the fuel supply unit 110 and the air supply unit 120. Hydrogen having passed the module unit 200 is supplied to the anode 131, and air having passed the module unit 200 is supplied to the cathode 132.

The electricity output unit 140 converts electric energy generated from the stack unit 130 into an alternating current thus to supply it to a load.

The water supply unit 150 supplies water to the stack unit 130 of the fuel supply unit 110 thus to cool the stack unit 130. The water supply unit 150 comprises a water supply container 151 for containing a certain amount of water, a water circulation line 152 for connecting the stack unit 130 and the water supply container 151 to each other, a water supply pump 153 installed at a middle portion of the water circulation line 152 for pumping water of the water supply container 151, and a heat exchanger 154 and a heat emission fan 155 installed at a middle portion of the water circulation line 152 for cooling supplied water.

A first recollect line L4 for accelerating an operation of the first gas-liquid separation unit 180 is installed between the water supply unit 150 and the first gas-liquid separation unit 180, and a second recollect line L5 for accelerating an operation of the second gas-liquid separation unit 190 is installed between the water supply unit 150 and the second gas-liquid separation unit 190. More concretely, the first recollect line L4 is installed to penetrate inside of the first gas-liquid separation unit 180. Moisture contained in hydrogen inside the first gas-liquid separation unit 180 is condensed by cooling water of the water supply unit 150 flowing on the first recollect line L4, and then is drained outwardly. The second recollect line L5 is installed to penetrate inside of the second gas-liquid separation unit 190. Moisture contained in off-gas inside the second gas-liquid separation unit 190 is condensed by cooling water of the water supply unit 150 flowing on the second recollect line L5, and then is drained outwardly.

The warm water supply unit 170 supplies stored warm water to the steam generator 111f through a pipe 156.

The first gas-liquid separation unit 180 is installed between the fuel supply unit 110 and the stack unit 130, thereby removing moisture contained in hydrogen supplied to the stack unit 130 from the fuel supply unit 110. A principle that the moisture is removed was aforementioned in the first recollect line L4, and thus its detailed explanation will be omitted.

The second gas-liquid separation unit 190 is installed between the fuel supply unit 110 and the stack unit 130, thereby removing moisture contained in off-gas supplied to the fuel supply unit 110 from the stack unit 130. A principle that the moisture is removed was aforementioned in the second recollect line L5, and thus its detailed explanation will be omitted.

FIG. 3 is a view showing a module unit of FIG. 2, in which the thick arrow indicates a transfer direction of heat.

Referring to FIG. 3, the module unit 200 comprises a used gas line L1 for exhausting used gas generated from the fuel supply unit 110, a fuel supply line L2 closely arranged at a lower side of the used gas line L1 for supplying hydrogen supplied from the fuel supply unit 110 to the stack unit 130, and an air supply line L3 closely arranged at a lower side of the fuel supply line L2 for supplying air supplied from the air supply unit 120 to the stack unit 130. The used gas line L1, the fuel supply line L2, and the air supply line L3 are integrally formed as one module. The used gas line L1, the fuel supply line L2, and the air supply line L3 can be integrally modularized by various methods such as a screw coupling, a bonding, a welding, etc.

As another example, the used gas line L1 is arranged at a center, the fuel supply line L2 is arranged to cover an outer circumferential surface of the used gas line L1, and the air supply line L3 is arranged to cover an outer circumferential surface of the fuel supply line L2.

The fuel supply line L2 is closely arranged at a lower side of the used gas line L1 thus to receive heat of used gas. Accordingly, hydrogen inside the fuel supply line L2 has an increased temperature, and is supplied to the stack unit 130. The used gas line L1 has a curved shape so as to accelerate a thermal diffusion of used gas having a high temperature inside the used gas line L1.

The air supply line L3 is closely arranged at a lower side of the fuel supply line L2 thus to receive heat of hydrogen inside the fuel supply line L2. Accordingly, air inside the air supply line L3 has an increased temperature, and is supplied to the stack unit 130.

The reason why the used gas line L1, the fuel supply line L2, and the air supply line L3 are arranged as shown in FIG. 3 will be explained.

The fuel supply line L2 is closely arranged at a lower side of the used gas line L1 so that heat of used gas having a high temperature flowing in the used gas line L1 can be firstly transmit to hydrogen inside the fuel supply line L2, the hydrogen required to be much boosted to 50°C~80°C. The air supply line L3 is closely arranged at a lower side of the fuel supply line L2 so that heat of hydrogen inside the fuel supply line L2 can be secondarily transmitted to air inside the air supply line L3, the air required to be a little booted.

As the used gas line L1, the fuel supply line L2, and the air supply line L3 are integrally formed as the module unit 200, hydrogen and air each having a requested temperature from the stack unit 130 can be supplied to the stack unit 130. Accordingly, a thermal efficiency of the fuel cell system is enhanced. Furthermore, heat of used gas exhausted through the used gas line L1 is utilized thus to enhance the thermal efficiency of the fuel cell system.

Hereinafter, a construction and an operation of a module unit according to another embodiment of the present invention will be explained.

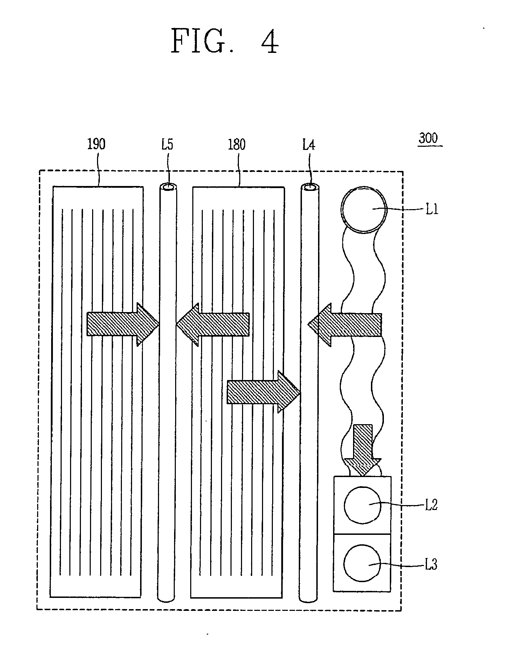

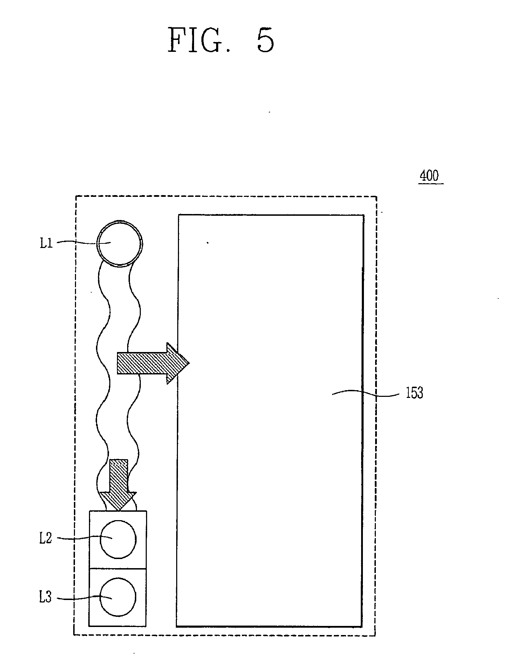

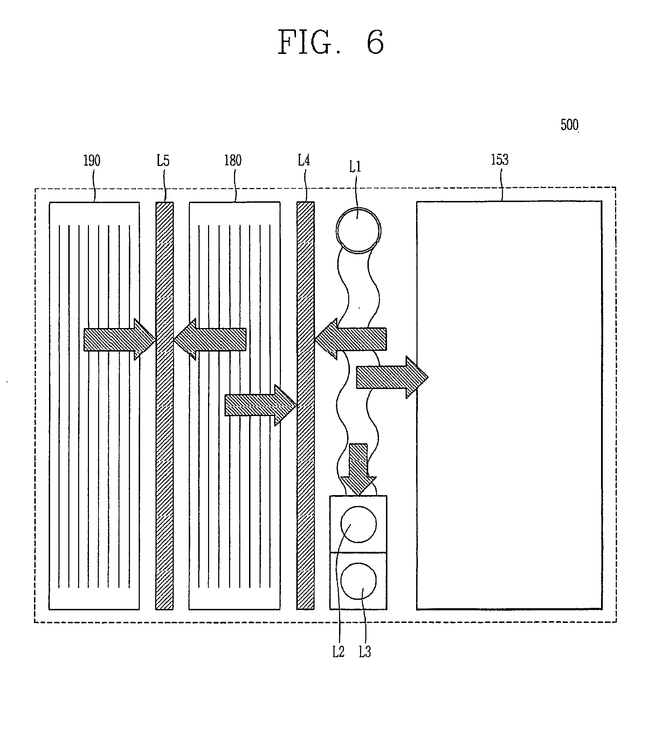

FIG. 4 is a view showing a module unit of FIG. 2 according to a first modification example, the module unit further including first and second gas-liquid separation units and first and second recollect lines, FIG. 5 is a view showing a module unit of FIG. 2 according to a second modification example, the module unit further including a heat exchanger; and FIG. 6 is a view showing a module unit of FIG. 2 according to a third modification example, the module unit further including the first and second gas-liquid separation units, the first and second recollect lines, and the heat exchanger.

Referring to FIGS. 2 and 4, a module unit 300 comprises a used gas line L1 for exhausting used gas generated from the fuel supply unit 110, a fuel supply line L2 closely arranged at a lower side of the used gas line L1 for supplying hydrogen supplied from the fuel supply unit 110 to the stack unit 130, an air supply line L3 closely arranged at a lower side of the fuel supply line L2 for supplying air supplied from the air supply unit 120 to the stack unit 130, a first gas-liquid separation unit 180 closely arranged at a left side of the used gas line L1, a second gas-liquid separation unit 190 closely arranged at a left side of the first gas-liquid separation unit 180, a first recollect line L4 arranged between the used gas line L1 and the first gas-liquid separation unit 180, and a second recollect line L5 arranged between the first gas-liquid separation unit 180 and the second gas-liquid separation unit 190.

Hydrogen and air each having a requested temperature from the stack unit 130 can be supplied to the stack unit 130 by the module unit 300, and thus a thermal efficiency of the fuel cell system is enhanced. Furthermore, heat of used gas exhausted through the used gas line L1 is utilized thus to enhance the thermal efficiency of the fuel cell system. Moreover, heat inside the used gas line L1 is transferred to the first gas-liquid separation unit 180 and the second gas-liquid separation unit 190, thereby maintaining a proper temperature for gas-liquid separation.

Referring to FIGS. 2 and 5, a module unit 400 comprises a used gas line L1 for exhausting used gas generated from the fuel supply unit 110, a fuel supply line L2 closely arranged at a lower side of the used gas line L1 for supplying hydrogen supplied from the fuel supply unit 110 to the stack unit 130, an air supply line L3 closely arranged at a lower side of the fuel supply line L2 for supplying air supplied from the air supply unit 120 to the stack unit 130, and a heat exchanger 153 closely arranged at a right side of the used gas line L1 for exchanging heat generated from the stack unit 130. Herein, the heat exchanger 153 may be arranged at a left side or at an upper side of the used gas line L1.

Hydrogen and air each having a requested temperature from the stack unit 130 can be supplied to the stack unit 130 by the module unit 400, and thus a thermal efficiency of the fuel cell system is enhanced. Furthermore, heat of used gas exhausted through the used gas line L1 is utilized thus to enhance the thermal efficiency of the fuel cell system. Moreover, heat inside the used gas line L1 is transferred to the heat exchanger 153 thus to utilize heat of used gas.

Referring to FIGS. 2 and 6, a module unit 500 comprises a used gas line L1 for exhausting used gas generated from the fuel supply unit 110, a fuel supply line L2 closely arranged at a lower side of the used gas line L1 for supplying hydrogen supplied from the fuel supply unit 110 to the stack unit 130, an air supply line L3 closely arranged at a lower side of the fuel supply line L2 for supplying air supplied from the air supply unit 120 to the stack unit 130, a first gas-liquid separation unit 180 closely arranged at a left side of the used gas line L1, a second gas-liquid separation unit 190 closely arranged at a left side of the first gas-liquid separation unit 180, a first recollect line L4 arranged between the used gas line L1 and the first gas-liquid separation unit 180, a second recollect line L5 arranged between the first gas-liquid separation unit 180 and the second gas-liquid separation unit 190, and a heat exchanger 153 closely arranged at a right side of the used gas line L1 for exchanging heat generated from the stack unit 130.

Hydrogen and air each having a requested temperature from the stack unit 130 can be supplied to the stack unit 130 by the module unit 500, and thus a thermal efficiency of the fuel cell system is enhanced. Furthermore, heat of used gas exhausted through the used gas line L1 is utilized thus to enhance the thermal efficiency of the fuel cell system. Moreover, heat inside the used gas line L1 is transferred to the first gas-liquid separation unit 180 and the second gas-liquid separation unit 190, thereby maintaining a proper temperature for gas-liquid separation. Furthermore, heat inside the used gas line L1 is transferred to the heat exchanger 153 thus to utilize heat of used gas.

As aforementioned, the fuel cell system according to the present invention is provided with the module unit formed as the used gas line, the fuel supply line, and the air supply line are integrally modularized. Accordingly, hydrogen and air each having a requested temperature from the stack unit are supplied to the stack unit, thereby enhancing a thermal efficiency of the fuel cell system.

Second, heat of used gas exhausted through the used gas line is utilized thus to enhance the thermal efficiency of the fuel cell system.

Third, the fuel cell system has a decreased volume owing to the modularization of each component, thereby having an enhanced mass productivity. Also, an entire fabrication cost of the fuel cell system is reduced due to a short length of the pipe.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system, comprising:
a stack unit for generating electricity by electrochemically reacting hydrogen and air;
a fuel supply unit for supplying hydrogen to the stack unit;
an air supply unit for supplying air to the stack unit; and
a module unit having a used gas line for exhausting used gas generated from the fuel supply unit, having a fuel supply line for supplying hydrogen provided from the fuel supply unit to the stack unit, and having an air supply line for supplying air provided from the air supply unit to the stack unit, in which the used gas line, the fuel supply line, and the air supply line are sequentially arranged and integrally modularized.

2. The fuel cell system of claim 1, wherein the fuel supply line is arranged at a lower side of the used gas line, and the air supply line is arranged at a lower side of the fuel supply line.

3. The fuel cell system of claim 1, wherein the used gas line is arranged at a center, the fuel supply line is arranged so as to cover an outer circumferential surface of the used gas line, and the air supply line is arranged so as to cover an outer circumferential surface of the fuel supply line.

4. The fuel cell system of claim 1, wherein the module unit further comprises:
a first gas-liquid separation unit closely arranged to the used gas line, for removing moisture contained in hydrogen supplied to the stack unit from the fuel supply unit;
a second gas-liquid separation unit closely arranged to the first gas-liquid separation unit, for removing moisture contained in off-gas supplied to the fuel supply unit from the stack unit;
a first recollect line installed between the used gas line and the first gas-liquid separation unit; and
a second recollect line installed between the first gas-liquid separation unit and the second gas-liquid separation unit.

5. The fuel cell system of claim 1, wherein the module unit further comprises a heat exchanger closely arranged to the used gas line, for exchanging heat generated from the stack unit.

6. The fuel cell system of claim 1, wherein the module unit further comprises:
a first gas-liquid separation unit closely arranged at a left side of the used gas line, for removing moisture contained in hydrogen supplied to the stack unit from the fuel supply unit;
a second gas-liquid separation unit closely arranged at a left side to the first gas-liquid separation unit, for removing moisture contained in off-gas supplied to the fuel supply unit from the stack unit;
a heat exchanger closely arranged at a right side of the used gas line for exchanging heat generated from the stack unit;
a first recollect line installed between the used gas line and the first gas-liquid separation unit; and
a second recollect line installed between the first gas-liquid separation unit and the second gas-liquid separation unit,
wherein the fuel supply line is closely arranged at a lower side of the used gas line, and the air supply line is closely arranged at a lower side of the fuel supply line.
